# EUROPEAN PATENT SPECIFICATION

(11) **EP 0 846 909 B1**
(45) Date of publication and mention of the grant of the patent: **21.01.2004**
(21) Application number: 97203739.4
(22) Date of filing: 28.11.1997
(51) Int. Cl.: F16L 55/033

(54) **Damping eccentric element for hydraulic systems**
Dämpfungsexzenterelement für hydraulische Anlagen
Elément amortisseur excentrique pour systèmes hydrauliques

(30) Priority: 04.12.1996 IT MI960795 U
(43) Date of publication of application: 10.06.1998
(73) Proprietor: Carrara Massimo S.r.l., 28076 Pogno (Novara) (IT)
(72) Inventor: Carrara, Massimo, 28076 Pogno (Novara) (IT)
(74) Representative: De Gregori, Antonella

(56) References cited:
- EP-A- 0 713 995
- WO-A-94/13997
- FR-A- 2 374 582

## Description

This invention relates to a damping eccentric element for hydraulic systems.

In hydraulic systems, in particular in water pipes leading to taps or mixers, it is known to install elements able to absorb water hammering or sudden pressure variations arising in the pipes.

These elements must be able not only to protect the integrity of the pipes and the relative connections, but also to eliminate or minimize the disturbing noise generated in the hydraulic circuit.

WO 9413997 A refers to a damping eccentric element according to the preambule of claim 1.

The object of the present invention is therefore to provide an element or arrangement which minimizes or totally eliminates the aforesaid drawbacks.

This object is attained according to the present invention by a damping eccentric element for hydraulic systems according to claim 1.

The characteristics and advantages of a damping eccentric element for hydraulic systems according to the present invention will be more apparent from the following description given by way of nonlimiting example with reference to the accompanying schematic drawings, on which:
Figure 1 is a very schematic view of a part of a hydraulic circuit in which a pair of damping eccentric elements of the present invention are positioned in correspondence with the connection region between two pipes of a mixer;
Figure 2 is an enlarged section through a damping eccentric element of the present invention;
Figures 3 and 4 are respectively a cross-section and a side elevation of a support ring present in the eccentric element of Figure 2;
Figure 5 is a longitudinal section through an insert of flexible material, such as rubber, included in the assembly of Figure 2;
Figures 6-8 are respectively two external views of the body of the eccentric element taken from different sides, and a section on the line A-A thereof.

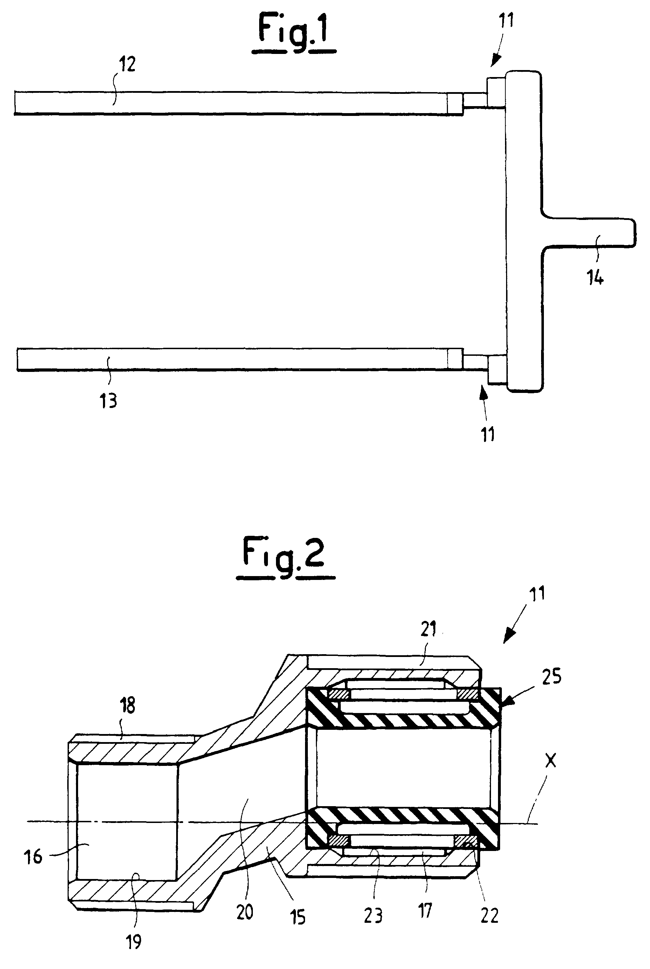

With reference to the aforegoing, Figure 1 shows very generically the position in which a damping eccentric element for hydraulic systems of the present invention is mounted. In this respect the eccentric element, indicated overall by 11, is positioned in correspondence with the connection region between each of two pipes 12, 13 and the base of a mixer 14. Figure 1 shows a pair of such eccentric elements 11 positioned as stated.

The eccentric element 11 comprises a hollow body 15, for example constructed of brass and then nickel-plated, having two large ends 16 and 17 positioned eccentrically to an axis of the body X.

A first smaller end 16 is arranged to be connected to one of the two pipes 12 and 13 and has an outer threaded surface portion 18.

In its interior it has an extremely wide cavity, with inner walls 19 parallel to its outer walls as far as an intermediate constriction 20 which connects this first end to the second end 17.

The second end 17, of larger size than the first, is the end which is connected to a water distributer, for example to the base of the mixer 14, and also has an outer threaded portion 21.

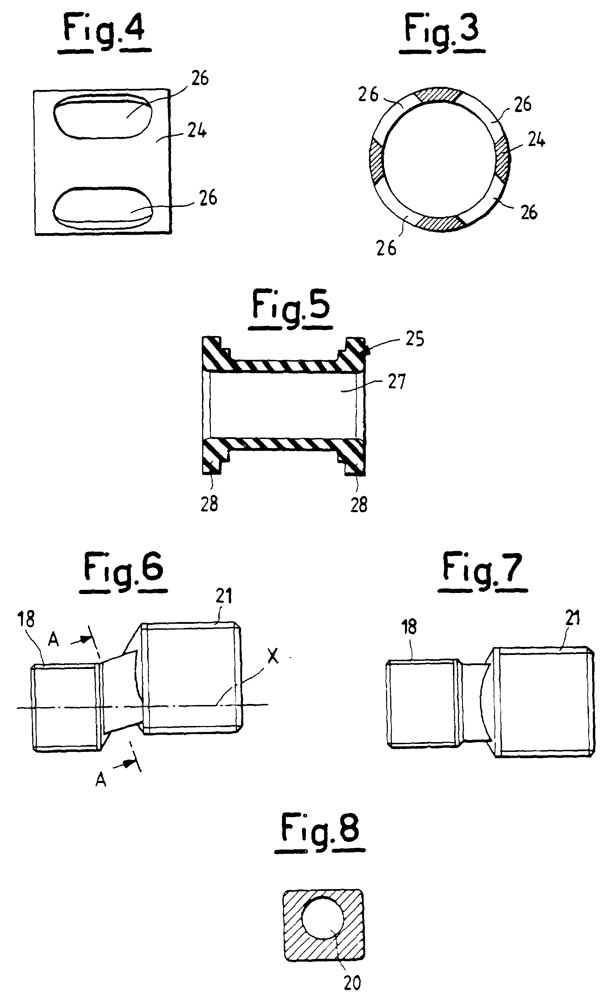

The sectional view of Figure 8 clearly shows both the outer and inner form of the intermediate constriction 20. The large second end 17 also has a very large inner cavity, with inner walls 22 essentially parallel to the outer walls, but is provided with a further outwardly recessed annular portion 23. This inner cavity is also connected to the intermediate constriction 20 which connects the second end 17 to the first end 16 of the body of the eccentric element.

A support ring 24 and an insert 25 of flexible material, such as rubber, are positioned within the cavity of the second end 17.

The support ring 24 is of hollow cylindrical shape and has a set of four apertures 26 in its lateral surface. The apertures 26 are of oval shape and occupy a large part of the surface.

The flexible material insert 25 acts as an actual silencer and expands during passage of the water to compel it to take a forced path. The insert 25 is in the form of a spool with a cylindrical inner passage 27 and outer surfaces provided with stepped end flanges 28.

This construction of these parts results in sufficiently precise positioning both of the insert 25 and of the support ring 24 within the wide cavity, and of the further recessed annular portion 23. In this respect the stepped end flanges provide extremely precise positioning between the parts, which prevents the rubber element floating. It is precisely this positioning which ensures minimization of the disturbances encountered in previously known devices.

Also at the first end there is a wide cavity enlarging from the intermediate constriction 20, to further increase the effectiveness of the silencer device.

A damping eccentric element for hydraulic systems according to the present invention is hence able not only to protect the integrity of the pipes and relative connections, but also to eliminate or minimize the disturbing noise generated in the hydraulic circuit in which it is mounted.

## Claims

1. A damping eccentric element for hydraulic systems, of the type comprising a hollow body (15) which in that end to be connected to a water distributer (14) contains a rubber insert (25) and a support ring (24) for it, wherein said hollow body (15) comprises two large ends (16, 17) positioned eccentric to an axis (X) of said body and connected together by an intermediate constriction (20), said large ends being externally threaded (18, 21) and having inner walls (19, 22) essentially parallel to the outer walls, said inner walls (22) of one (17) of said large ends having a further recessed annular portion (23), said insert (25) being of spool shape with a cylindrical inner passage (27) and outer surfaces being provided with stepped end flanges (28), **characterised in that** said end flanges provide, on the inner lateral side of each flange of the insert, an additional, step that supports the end of the supporting ring (24).

2. A damping eccentric element for hydraulic systems as claimed in claim 1, **characterised in that** said support ring (24) is of hollow cylindrical shape and comprises several apertures (26) in its lateral surface.

3. A damping eccentric element for hydraulic systems as claimed in claim 2, **characterised in that** said apertures (26) are three in number, are of oval shape, and occupy a large part of the outer surface of said support ring (24).

## Patentansprüche

1. Dämpfendes Exzenterelement für hydraulische Anlagen, des Typs mit einem Hohlkörper (15), der in dem Ende, das mit einem Wasserverteiler (14) zu verbinden ist, eine Gummieinlage (25) und einen Stützring (24) dafür aufweist, wobei der Hohlkörper (15) zwei große Enden (16, 17) aufweist, die exzentrisch in Bezug auf eine Achse (X) des Körpers angeordnet und durch einen dazwischenliegenden verjüngten Abschnitt (20) verbunden sind, wobei die genannten großen Enden ein Außengewinde (18, 21) aufweisen und Innenwände (19, 22), die im wesentlichen sich parallel zu den Außenwänden erstrecken, wobei die genannten Innenwände (22) von einem (17) der genannten großen Enden einen weiteren, zurückgesetzten ringförmigen Abschnitt (23) aufweisen, und die Einlage (25) spulenförmig ist mit einem zylinderförmigen inneren Durchgang (27) und einer Außenfläche, die mit gestuften Endflanschen (28) versehen ist, **dadurch gekennzeichnet, dass** die Endflansche auf der inneren Querseite jedes Flansches der Einlage eine zusätzliche Stufe aufweisen, die das Ende des Stützringes (24) abstützt.

2. Dämpfendes Exzenterelement für hydraulische Anlagen gemäß Anspruch 1, **dadurch gekennzeichnet, dass** der genannte Stützring (24) von hohlzylindrischer Gestalt ist und mehrere Öffnungen (26) in seiner Seitenfläche aufweist.

3. Dämpfendes Exzenterelement für hydraulische Anlagen gemäß Anspruch 2, **dadurch gekennzeichnet, dass** die Anzahl der genannten Öffnungen (26) drei beträgt, ihre Form oval ist und dass sie einen großen Teil der Außenfläche des genannten Stützringes (24) einnehmen.

## Revendications

1. Elément excentrique amortisseur pour systèmes hydrauliques du type comprenant un corps creux (15) qui, dans l'extrémité à raccorder à un distributeur d'eau (14), contient un insert en caoutchouc (25) et un anneau de support (24) pour celui-ci, dans lequel ledit corps creux (15) comprend deux grandes extrémités (16,17) positionnées excentriquement par rapport à un axe (X) dudit corps et raccordées ensemble par un rétrécissement intermédiaire (20), lesdites grandes extrémités étant filetées extérieurement (18,21) et ayant des parois internes (19,22) sensiblement parallèles aux parois externes, lesdites parois internes (22) de l'une (17) desdites grandes extrémités ayant une autre portion annulaire encastrée (23), ledit insert (25) ayant une forme de bobine avec un passage interne cylindrique (27) et des surfaces externes munies de flasques d'extrémité en gradins (28),
**caractérisé en ce que** lesdites flasques d'extrémité assurent, sur le côté latéral interne de chaque flasque de l'insert, un gradin supplémentaire qui supporte l'extrémité de l'anneau de support (24).

2. Elément excentrique d'amortissement pour systèmes hydrauliques selon la revendication 1,
**caractérisé en ce que** ledit anneau de support (24) est de forme cylindrique creuse et comprend plusieurs ouvertures (26) dans sa surface latérale.

3. Elément excentrique d'amortissement pour systèmes hydrauliques selon la revendication 2,
**caractérisé en ce que** lesdites ouvertures (26) sont au nombre de trois, ont une forme ovale et occupent une grande partie de la surface externe dudit anneau de support (24).
